# NEW EUROPEAN PATENT SPECIFICATION

(11) **EP 0 474 205 B2**
(45) Date of publication and mention of the opposition decision: **07.01.2004**
(45) Mention of the grant of the patent: 09.07.1997
(21) Application number: 91114891.4
(22) Date of filing: 04.09.1991
(51) Int. Cl.: H04N 7/087

(54) **Teletext receiver**
Teletextempfänger
Récepteur de télétexte

(30) Priority: 06.09.1990 IT 6766790
(43) Date of publication of application: 11.03.1992
(73) Proprietor: EDICO S.r.l., 00196 Roma (IT)
(72) Inventor: Dini, Roberto, I-10098 Rivoli (TO) (IT); Farina ,Attilio, 10100 Torino (IT)
(74) Representative: Eisenführ, Speiser & Partner

(56) References cited:
- DE-A- 3 721 614
- FR-A- 2 573 885
- PATENT ABSTRACTS OF JAPAN vol. 9, no. 159 (E-326)4 July 1985 & JP-A-60 035 889 & Week 8514, Derwent Publications Ltd., London, GB; AN85084437

## Description

The present invention relates to a receiver for an information system, of the type specified in the preamble of the attached claim 1.

A receiver of the type indicated is known from DE-A-37 21 614.

It is know from the patent abstracts of Japan vol. 9, no. 159 (E-326) & JP-A-60 035 889 an error erasing key for erasing the last inputted digit. From the extract from the operating instructions of a TV-set made by Metz Werke GmbH & Co. KG, Model Studio Stereo FST 7744, print code 689 47 1055/39103 it is known to have a special key having a cancellation function in the teletext mode.

It is known that in various European countries, one of which being Italy, there are systems in use (generally known by the English term "teletext", and more specifically in Italy by the term "televideo" and in Germany "Videotext") that permit the transmission, together with the normal television signals, of additional information, included in the video signal (under the form of coded digital signals) in some of the free horizontal lines during the period of vertical retrace.

Said coded signals, on command of the user, are decoded by a suitable decoding circuit, known and normally realised by means of integrated monolitic circuits, inserted in the television's circuits, so as to allow the viewing on the television screen of one of the pages of information transmitted, containing written text or graphics.
The pages normally transmitted amount to several hundred, grouped in subjects (for example: latest news: pages 110-125, sport: pages 150-162, politics: pages 210-222, games: pages 315-345, etc.); on the first page (page 0) the general index of subjects is usually contained, and on the successive pages the sub-headings for each subject, along with the digits of the relative pages.

The user must, each time that a determined page is required, type in sequence three numerical keys so as to form the three figured digit of the desired page; if during this operation any errors are made, such as typing a wrong key by mistake, or by involuntary double typing a key of the control unit (normally a television remote control), the sequence of digits must however be completed and then the correct three digits retyped; on the whole this is rather unsatisfactory. Moreover it may happen that, by directing the remote control unit incorrectly towards the receiver, one of the digits becomes lost, so the user feels the need to recommence from the beginning of the operation cancelling all the digits conveyed up to that moment.

It is known from Patent abstract of Japan, Vol.9, No. 159 and JP-A-60 035 889 in a broadcast receiver, to reduce the arranged number of keys and to improve operation, a prescribed key, if repeatedly operated a prescribed number of times, cancels information inputted immediately before through a key input system.

It is also known from FR-A-2 573 885, in a computer system providing a computer keyboard for persons with a brain motor disease, to provide a special key for cancelling completely or in part a hexadecimal number inputted by mistake.

The aim of the present invention is to realise a receiver for a Teletext transmission system that allows the user, in a simple way, to remedy an error or a loss of digits during the course of the operation of sending to the decoder the sequence of digits for obtaining the desired page.

So as to achieve such aims the present invention has as its object a receiver for an information transmission system having the characteristics described in the attached claim 1.

The characteristics and the advantages of the improved receiver for Teletext transmissions according to the invention become evident in the following description, effected with reference to the annexed drawings, supplied as a non limiting example, wherein:
Figure 1 represents a block diagram of the part of the circuit according to the invention of a Teletext signal receiver;
Figure 2 schematically represents the command unit of the receiver in figure 1;
Figure 3 represents the logic flow of the functioning of the control unit of the receiver in figure 1.

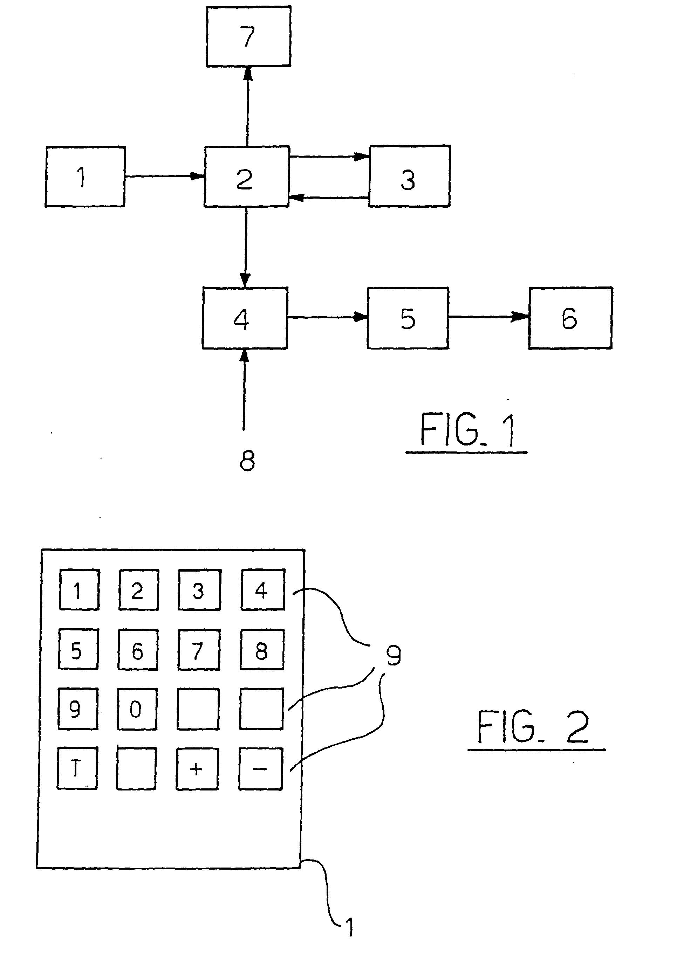

In figure 1, the command unit is indicated with the reference digit 1, digit 2 indicates the control unit, with the reference digit 3 a small reading and writing memory (of the type commonly named RAM -Random Access Memory-) for memorising at least the digit of a page is indicated; said memory may also be comprised in the control unit 2.

With the digit 4 a Teletext decoder is indicated, digit 5 represents the page memory (or, alternatively, of four or eight pages), with the digit 6 the visualisation system of the contents of the chosen page is indicated, and digit 7 represents a supplementary viewer for visualising the page digit.

The command unit 1 can be of the type known, for example the keyboard of a television remote control; it must provide the usual digited keys from 0 to 10 and the other standard keys for the command of the receiver, among which two keys characterised with the symbols "+" and "-" or with other equivalent symbols, such as "left arrow" and "right arrow', and a key to enable the Teletext reception (that may be characterised with the letter "T" or an equivalent symbol); in figure 2, that schematically represents the keyboard of a possible control unit, the above mentioned selection of keys are indicated.
The control unit 2 according to the invention will be described later. The decoder 4, the page memory 5 and the visualisation system 6 can be of the type normally used in Teletext receivers of the type known; the visualisation system 6 is usually represented by the television screen.

The viewer 7 can be a known display of three figures of the 7 segment LED type.

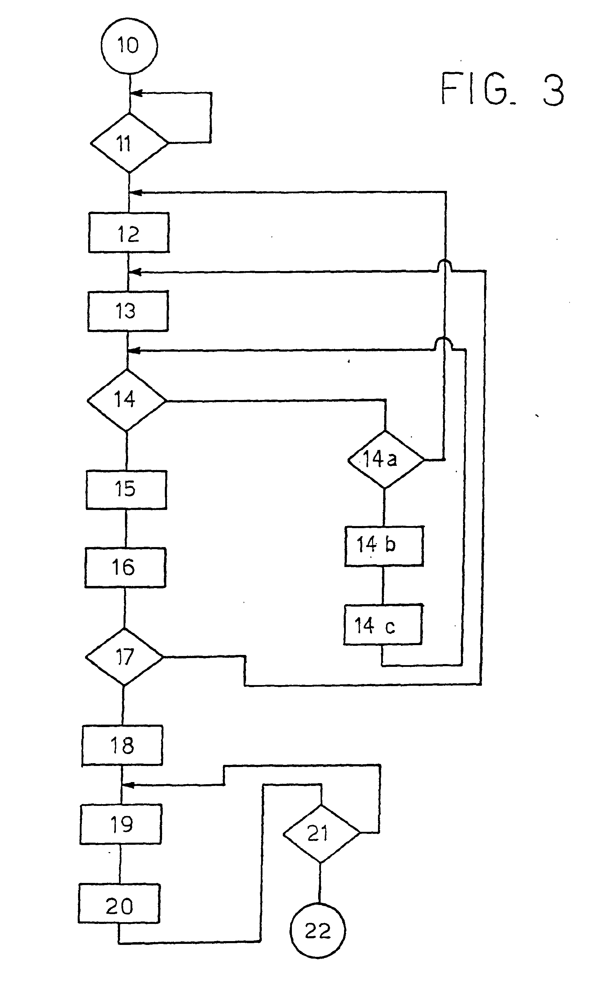

In figure 3 the logic flow that connects the logic blocks of the control unit 2 is represented; such control unit can be realised with cabled logic blocks or with a microprocessor system (programmed logic); the two systems are perfectly equivalent from a functional point of view.

Block 10 is the block of initial operations; block 11 is a block that verifies whether the key "T" has been pressed on the control unit 1; in the verifying blocks, in figure 3, output in the under section corresponds to the reply "YES", i.e. the key "T" has been selected, block 11 passes the control to the successive block 12; in the contrary case, control passes back to block 11.

Block 12 carries out the following opening operations:
- zeroes a digit counter "N";
- zeroes the display of the page digit 7;
- arranges for the memory 3 to be written;
- passes the control to the successive block 13.

Block 13 increases the counter "N" by one unit and passes the control to the successive block 14.

Block 14 verifies whether the key "-" or the equivalent key "left arrow" has been selected on the command unit 1, in the affirmative case, control passes to block 14a, in the negative case the control retums to block 12.

Block 14b decreases the counter "N" by one unit and passes control to block 14c; block 14c substitutes in the display a dash in the position "N": control then retums to block 14.

Block 15 sends to the display 7 the digit of the key selected, that is viewed; the successive block 16 sends the same digit, appropriately coded, to the address N of the memory 3, where it is memorised.

Block 17 verifies whether the counter "N" has reached the digit 3, i.e. it verifies whether a page digit of three digits has been completed; in the affirmative case control passes to the successive block 18, on the contrary control returns to block 13.

Block 18 arranges for the memory to be read ("HEAD"), zeroes the counter "N" and passes the control to block 19.

Block 19 increases the counter "N" by one unit; block 20 extracts from the memory 3 the digit memorised at the address N and sends it to the decoder 4.

Block 21 verifies whether the counter "N" has reached the digit 3, in the affirmative case control passes to the successive block 22, on the contrary control returns to block 19.

Block 22 terminates the operation of the control unit for the current cycle; in practice control retuns to the initial block 10 for eventually starting a new cycle of operations.

The functioning of the described circuit is the following.

The user who wishes to receive a Teletext page must first of all press the key 'T' to enable the Teletext functioning.

Secondly, the user begins to form the three digits of the desired page (for example page 162); which appear on the indicator 7; if the user becomes aware that a wrong key has been selected by mistake (for example key N°5 after the key N°1), it is sufficient to press the key "-"; the mark "-" substitutes in the display the mistaken digit, in the present case 5, and the circuit is predisposed to accept a new secong digit (correct); if the user had mistyped the first digit, but became aware of the fact only after entering the second digit, it would be sufficient to press the key "+" and the two digits become cancelled, while the circuit becomes predisposed to newly accept the first digit.

As is clear from the description of the functioning mode of the control unit 2 according to the invention, the user can, while carrying out the operation of forming the digit of the desired Teletext page, cancel a digit entered by mistake, by pressing the key"-" or an equivalent key, and cancel the entire operation starting from the beginning, pressing another un-digited key available, for example "+".

As is clear from the effected description, the improved receiver for Teletext transmissions according to the invention, provides a noted improvement in facilitating the user in forming the digit of the Teletext page desired.

If is obvious that, without departing from the principles of the invention, numerous variants are possible of the constructive characteristics of the improved receiver for Teletext transmissions described as an example.

For example, given that the decoder 4 usually comprises a microprocessor already, a variant to the receiver described could be realised integrating the control unit 2 with the decoder 4 in a sole functional unit, whose functioning be controlled by a single microprocessor, with an evident saving of equipment and thus costs. A further variant could consist in utilising the visualisation system 6 instead of the display 7 of three digits for indicating the page digit to be selected.

## Claims

1. "Receiver for a transmission system, transmitting information together with normal television signals, said information being represented by a plurality of pages, each of which is selectable by the user from receivable pages, by sending to the receiver a sequence of digits which identify the chosen page, comprising command means (1) which provide a plurality of standard keys, activated by the user for generating command signals and with control means (2), coupled to the command means for generating, in reply to said command signals, the sequence of digits and with a decoder circuit (4), connected to the control means (2), able to receive, select, process and reproduce the pages of information after receiving the sequence of digits, and further comprising key means for cancelling at least one digit included in the sequence by mistake, **characterised by** the fact that a standard " - " or "left arrow" key for the command of the receiver is foreseen for cancelling one digit included in the sequence by mistake, and a standard " + " or "right arrow" key for the command of the receiver is foreseen for cancelling more than one digit included in the sequence by mistake, said standard " + " or "right arrow" key being pressed once to perform said cancellation, which said standard keys, during the period of time when the control means (2) are receiving the input of said sequence of digits, are not operative for their normal function as standard " - " or "left arrow" and " + " or "right arrow" keys, respectively, for the command of the receiver, but perform said cancellation functions instead."

2. Receiver for an information transmission system, according to claim 1, **characterised by** the fact that said control means (2) provide for the substitution, after one of said cancelling keys has been selected (-), in the course of generating said sequence of digits, of the digit or the digits cancelled with that or those corresponding to a new digited key or keys that is/are selected by the user.

3. Receiver for an information transmission system, according to the previous claim, **characterised by** the fact that said control unit (2) is realised in hard-wired logic.

4. Receiver for an information transmission system, according to any one of the previous claims, **characterised by** the fact that said control unit (2) is realised by programmed logic and comprises a microprocessor.

5. Receiver for an information transmission system, according to claim 4, **characterised by** the fact that said control unit (2) is integrated with said decoder (4) and that both of said units are controlled by a single microprocessor.

6. Receiver for an information transmission system, according to any one of the previous claims, **characterised by** the fact that a separate visualisation device (7) for the digits of said sequence is provided.

## Patentansprüche

1. Empfänger für ein Übertragungssystem, welches Informationen zusammen mit normalen Femsehsignalen sendet, wobei die Information dargestellt wird durch eine Mehrzahl von Seiten, von denen jede von dem Benutzer aus empfangbaren Seiten auswählbar ist durch Senden einer Folge von Ziffern zu dem Empfänger, welche die ausgewählte Seite identifizieren, mit einer Befehlseinrichtung (1), welche eine Mehrzahl von Standardtasten bereitstellt, aktiviert durch den Benutzer zum Erzeugen von Befehlssignalen, und mit Steuermitteln (2), gekoppelt an Befehlsmittel, um als Reaktion auf die Befehlssignale die Folge von Ziffem zu erzeugen, und mit einer Dekodierschaltung (4), angeschlossen an die Steuermittel (2), welche in der Lage ist, die Informationsseiten nach Empfang der Folge von Ziffem zu empfangen, auszuwählen, zu verarbeiten und wiederzugeben, und mit Tastenmitteln zum Löschen wenigstens einer fälschlich in der Ziffernfolge enthaltenen Ziffer, **dadurch gekennzeichnet, dass** eine Standard- "-" oder "Pfeil links"-Taste für den Befehl des Empfängers vorgesehen ist zum Löschen einer fälschlich in der Folge enthaltenen Ziffer und eine Standard-"+" oder "Pfeil rechts"-Taste für den Befehl des Empfängers vorgesehen ist zum Löschen mehr als einer fälschlich in der Folge vorgesehenen Ziffer, wobei die Standard-"+" oder "Pfeil rechts"-Taste einmal gedrückt wird, um die Löschung auszuführen, wobei die Standard-Tasten während des Zeitabschnittes, in welchem die Steuermittel (2) das Eingangssignal der Folge von Zeichen empfängt, nicht ihrer normalen Funktion als Standard-"-" oder "Pfeil links" und "+" oder "Pfeil rechts"-Tasten entsprechend für den Befehl des Empfängers wirken, sondem statt dessen die Löschfunktionen ausführen.

2. Empfänger für ein Informations-Übertragungssystem nach Anspruch 1, **dadurch gekennzeichnet, dass** die Steuermittel (2) die Substitution, nachdem eine der Löschtasten ausgewählt wurde (-), im Verlauf des Erzeugens der Folge von Ziffem, der gelöschten Ziffer oder Ziffem durch diejenige oder diejenigen, die einer neuen, vom Benutzer ausgewählten Ziffemtaste oder -tasten entsprechen, ermöglicht.

3. Empfänger für ein Informations-Übertragungssystem nach einem der vorstehenden Ansprüche, **dadurch gekennzeichnet, dass** die Steuerungseinheit (2) in fest verdrahteter Logik verwirklicht ist.

4. Empfänger für ein Informations-Übertragungssystem nach einem der vorstehenden Ansprüche, **dadurch gekennzeichnet, dass** die Steuereinheit (2) durch programmierte Logik verwirklicht ist und einen Mikroprozessor umfasst.

5. Empfänger für ein Informations-Übertragungssystem nach Anspruch 4, **dadurch gekennzeichnet, dass** die Steuereinheit (2) in den Dekodierer (4) integriert ist, und dass beide Einheiten von einem einzelnen Mikroprozessor gesteuert werden.

6. Empfänger für ein Informations-Übertragungssystem nach einem der vorstehenden Ansprüche, **dadurch gekennzeichnet, dass** eine getrennte Visualisierungsanordnung (7) für die Ziffern der Folge vorgesehen ist.

## Revendications

1. Récepteur pour un système de transmission, transmettant l'information conjointement avec des signaux de télévision normaux, ladite information étant représentée par une pluralité de pages, dont chacune peut être sélectionnée par l'utilisateur à partir de pages pouvant être reçues, en transmettant au récepteur une séquence de chiffres qui identifient la page choisie, comprenant des moyens de commande (1) qui fournissent plusieurs touches standard, activées par l'utilisateur pour produire des signaux de commande et avec des moyens de commande (2) couplés aux moyens de commande pour produire, en réponse auxdits signaux de commande, la séquence de chiffres, et avec un circuit décodeur (4), relié aux moyens de commande (2), capable de recevoir, sélectionner, traiter et reproduire les pages d'information après la réception de la séquence de chiffres, et comprenant en outre des moyens formant touche pour supprimer au moins un chiffre figurant dans la séquence par erreur, **caractérisé par le fait qu'**une touche standard " - " ou à " flèche gauche " pour la commande du récepteur est prévue pour supprimer un chiffre figurant dans la séquence par erreur, et une touche standard " + " ou à " flèche droite " pour la commande du récepteur est prévue pour supprimer plus qu'un chiffre figurant dans la séquence par erreur, ladite touche standard " + " ou à " flèche droite " étant enfoncée une fois pour accomplir ladite suppression, lesquelles touches standard, pendant la période de temps où les moyens de commande (2) reçoivent l'entrée de ladite séquence de chiffres, ne sont pas actifs pour leur fonction normale comme touches standard " - " ou à " flèche gauche " et " + " ou à " flèche droite ", respectivement, pour la commande du récepteur mais exécutent des fonctions de suppression à la place.

2. Récepteur pour un système de transmission d'information selon la revendication 1, **caractérisé par le fait que** les moyens de commande précités (2) produisent la substitution, après que l'une desdites touches de suppression a été sélectionnée (-) au cours de la production de la séquence précitée des chiffres, du chiffre ou des chiffres supprimés par celui ou ceux correspondant à une nouvelle touche numérique ou des nouvelles touches numériques qui est/sont sélectionnées par l'utilisateur.

3. Récepteur pour un système de transmission d'information selon la revendication précédente, **caractérisé par le fait que** l' unité de commande précitée (2) est réalisée en logique câblée.

4. Récepteur pour un système de transmission d'information selon l'une quelconque des revendications précédentes, **caractérisé par le fait que** l'unité de commande précitée (2) est réalisée par logique programmée et comprend un microprocesseur.

5. Récepteur pour un système de transmission d'information selon la revendication 4, **caractérisé par le fait que** l'unité de commande précitée (2) est intégrée au décodeur précité (4) et que les deux unités précitées sont commandées par un microprocesseur unique.

6. Récepteur pour un système de transmission d'information selon l'une quelconque des revendications précédentes, **caractérisé par le fait qu'**un dispositif de visualisation séparé (7) pour les chiffres de la séquence précitée est prévu.
